# EUROPEAN PATENT APPLICATION

(11) **EP 4 403 955 A1**
(43) Date of publication of application: **24.07.2024**
(21) Application number: 23218895.3
(22) Date of filing: 20.12.2023
(51) Int. Cl.: G01S 7/481, G01S 7/497, G01S 17/931, G01P 3/46

(54) **HUMAN EYE PROTECTION CIRCUIT, CONTROL METHOD THEREFOR, ELECTRONIC DEVICE, MEDIUM, AND VEHICLE**

(30) Priority: 19.01.2023 CN 202310102051
(71) Applicant: Nio Technology (Anhui) Co., Ltd, Hefei City, Anhui 230611 (CN)
(72) Inventor: LAI, Ziyang, Hefei City, Anhui, 230611 (CN); GAO, Xianglong, Hefei City, Anhui, 230611 (CN)
(74) Representative: Vossius & Partner Patentanwälte Rechtsanwälte mbB

(57) **Abstract**

The disclosure relates to the technical field of lidar, and specifically provides a human eye protection circuit, a control method therefor, an electronic device, a medium, and a vehicle, to resolve the problem of damage to human eyes caused by continuous emissions from a mechanical rotary vehicle-mounted lidar to a fixed object. For this purpose, the human eye protection circuit in the disclosure includes a comparator circuit (101) and a control circuit (102). The comparator circuit includes at least a first comparator (U1) and a second comparator (U2), an output terminal of the first comparator is connected to an input terminal of the second comparator, and the comparator circuit is configured to output a level signal to the control circuit based on a rotation situation of the rotating mirror motor. The control circuit includes at least one logic gate (U3), and the control circuit is configured to: receive the level signal output by the comparator circuit, and output a laser control signal to control whether the laser works. In this way, whether the laser works is automatically controlled based on the rotation situation of the rotating mirror motor (M), to prevent damage to human eyes caused by continuous emissions to a fixed object.

## Description

The present application claims priority of CN patent application 202310102051.4 filed on January 19, 2023 with the title "Human eye protection circuit, control method therefor, electronic device, medium, and vehicle".

### Technical Field

The disclosure relates to the technical field of lidar, and specifically provides a human eye protection circuit, a control method therefor, an electronic device, a medium, and a vehicle.

### Background Art

Currently, a mechanical rotary vehicle-mounted lidar is a lidar type widely used in vehicles, and has been put into production in recent years. A mechanical structure used for the mechanical rotary vehicle-mounted lidar rotates at a specific speed during working to obtain a horizontal panoramic field of view, and performs directional distributed scanning in a vertical direction, so that the mechanical rotary vehicle-mounted lidar stands out among many lidar types.

In the conventional technology, neither a commonly used laser driver nor a commonly used vehicle-mounted lidar considers possible damage to a human when a laser is faulty. The mechanical rotary vehicle-mounted lidar emits a laser pulse, and calculates a distance of an object based on a time of flight of the pulse. The mechanical rotary vehicle-mounted lidar includes a rotating mirror to emit a laser. If the rotating mirror is faulty and stops rotating, the rotating mirror continuously emits the laser pulse to a fixed object. Because an instantaneous power of a laser emitter is up to hundreds of watts, if a high and continuous peak power laser is fixedly emitted to a place for a long period of time, a safety hazard is easily caused, and especially, irreversible damage is caused to human eyes when the laser is emitted to the human eyes.

Accordingly, a new human eye protection solution is required in the art to resolve the above problem.

The problem of continuous emissions from the mechanical rotating vehicle-mounted lidar to a fixed object when the rotating mirror motor is faulty is resolved, so that safety of the vehicle-mounted lidar is improved.

### Summary of the Invention

To overcome the above disadvantages, the disclosure provides a human eye protection circuit, a control method therefor, an electronic device, a medium, and a vehicle, to resolve or at least partially resolve the problem of damage to human eyes caused by continuous emissions from a mechanical rotary vehicle-mounted lidar to a fixed object.

According to a first aspect, the disclosure provides a human eye protection circuit, applied to a mechanical rotary vehicle-mounted lidar. The vehicle-mounted lidar is provided with a laser and a rotating mirror motor configured to control rotation of the laser. The human eye protection circuit includes a comparator circuit and a control circuit. The comparator circuit includes at least a first comparator and a second comparator, an output terminal of the first comparator is connected to an input terminal of the second comparator, and the comparator circuit is configured to output a level signal to the control circuit based on a rotation situation of the rotating mirror motor. The control circuit includes at least one logic gate, and the control circuit is configured to: receive the level signal output by the comparator circuit, and output a laser control signal to control whether the laser works.

In a technical solution of the human eye protection circuit, the rotating mirror motor is provided with a Hall sensor, configured to convert the rotation situation of the rotating mirror motor into a level signal, and the comparator circuit includes: the first comparator is an inverting comparator, an inverting input terminal of the first comparator serves as an input terminal of the comparator circuit and receives the level signal sent by the Hall sensor, and a non-inverting input terminal of the first comparator is connected to a first reference voltage; the second comparator is a non-inverting comparator, the output terminal of the first comparator is connected to a non-inverting input terminal of the second comparator, an output terminal of the second comparator serves as an output terminal of the comparator circuit and outputs a level signal to the control circuit, and an inverting input terminal of the second comparator is connected to a second reference voltage; and the first reference voltage is lower than the second reference voltage.

In a technical solution of the human eye protection circuit, the comparator circuit further includes a first resistor and a capacitor. a common terminal of the first resistor and the capacitor is connected to the non-inverting input terminal of the second comparator, the other terminal of the first resistor is connected to a power supply voltage, and the other terminal of the capacitor is grounded.

In a technical solution of the human eye protection circuit, the control circuit includes: the logic gate is an exclusive OR gate, a first input terminal of the exclusive OR gate serves as an input terminal of the control circuit and receives the level signal output by the comparator circuit, and a second input terminal of the exclusive OR gate is connected to the controller; and an output terminal of the exclusive OR gate serves as an output terminal of the control circuit, and is configured to output the laser control signal to control whether the laser works.

According to a second aspect, the disclosure provides a control method for a human eye protection circuit, applied to a mechanical rotary vehicle-mounted lidar. The vehicle-mounted lidar is provided with a laser and a rotating mirror motor configured to control the laser to work. The method includes: obtaining a level signal based on a rotation situation of the rotating mirror motor; outputting a laser control signal based on the level signal and the human eye protection circuit according to any one of the above technical solutions; and automatically controlling, based on the control signal, whether the laser works.

In a technical solution of the control method, the rotating mirror motor is provided with a Hall sensor, configured to convert the rotation situation of the rotating mirror motor into the level signal, a metal ring of the rotating mirror motor is provided with a gap, the Hall sensor generates a high level when the gap passes the Hall sensor with rotation of the rotating mirror motor, and the control method for a human eye protection circuit further includes: converting the rotation situation of the rotating mirror motor into the level signal based on at least the following steps: outputting, by the Hall sensor, a low-level signal when the rotating mirror motor does not rotate; and outputting, by the Hall sensor, a pulse signal when the rotating mirror motor rotates, where a pulse period of the pulse signal depends on a rotation speed of the rotating mirror motor.

In a technical solution of the control method, the control method for a human eye protection circuit further includes: the pulse period of the pulse signal output by the Hall sensor is greater than a preset period threshold when the rotation speed of the rotating mirror motor is less than a preset rotation speed threshold; periodically outputting, by the first comparator, a low-level signal based on the pulse signal output by the Hall sensor, where a period of the low-level signal is consistent with the pulse period of the pulse signal output by the Hall sensor; and discharging the capacitor when the first comparator outputs the low-level signal, so that a level of a non-inverting input terminal of the second comparator is higher than a second reference voltage.

In a technical solution of the control method, the outputting a laser control signal includes: the output laser control signal is at a low level when the rotating mirror motor does not rotate or the rotation speed of the rotating mirror motor is less than a preset rotation speed threshold; and the output laser control signal is at a high level when the rotation speed of the rotating mirror motor is not less than the preset rotation speed threshold.

According to a third aspect, an electronic device is provided. The electronic device includes a processor and a memory, the memory is adapted to store a plurality of piece of program code, and the program code is adapted to be loaded and executed by the processor to perform the control method described in any one of the technical solutions of the control method for a human eye protection circuit.

According to a fourth aspect, a computer-readable storage medium is provided. The computer-readable storage medium stores a plurality of piece of program code, and the program code is adapted to be loaded and executed by the processor to perform the control method described in any one of the above technical solutions of the control method for a human eye protection circuit.

According to a fifth aspect, a vehicle is provided, including a vehicle body, vehicle-mounted lidar, and the human eye protection circuit and/or the electronic device according to any one of the above technical solutions.

Solution 1: A human eye protection circuit is provided, applied to a mechanical rotary vehicle-mounted lidar. The vehicle-mounted lidar is provided with a laser and a rotating mirror motor configured to control rotation of the laser. The human eye protection circuit includes a comparator circuit and a control circuit.

The comparator circuit includes at least a first comparator and a second comparator, an output terminal of the first comparator is connected to an input terminal of the second comparator, and the comparator circuit is configured to output a level signal to the control circuit based on a rotation situation of the rotating mirror motor.

The control circuit includes at least one logic gate, and the control circuit is configured to: receive the level signal output by the comparator circuit, and output a laser control signal to control whether the laser works.

Solution 2: In the circuit according to Solution 1, the rotating mirror motor is provided with a Hall sensor, configured to convert the rotation situation of the rotating mirror motor into a level signal. The comparator circuit includes:
the first comparator is an inverting comparator, an inverting input terminal of the first comparator serves as an input terminal of the comparator circuit and receives the level signal sent by the Hall sensor, and a non-inverting input terminal of the first comparator is connected to a first reference voltage;
the second comparator is a non-inverting comparator, the output terminal of the first comparator is connected to a non-inverting input terminal of the second comparator, an output terminal of the second comparator serves as an output terminal of the comparator circuit and outputs a level signal to the control circuit, and an inverting input terminal of the second comparator is connected to a second reference voltage; and the first reference voltage is lower than the second reference voltage.

Solution 3: In the circuit according to Solution 2, the comparator circuit further includes a first resistor and a capacitor; and
a common terminal of the first resistor and the capacitor is connected to the non-inverting input terminal of the second comparator, the other terminal of the first resistor is connected to a power supply voltage, and the other terminal of the capacitor is grounded.

Solution 4: In the circuit according to Solution 1, the control circuit includes: the logic gate is an exclusive OR gate, a first input terminal of the exclusive OR gate serves as an input terminal of the control circuit and receives the level signal output by the comparator circuit, and a second input terminal of the exclusive OR gate receives a high-level signal; and an output terminal of the exclusive OR gate serves as an output terminal of the control circuit, and is configured to output the laser control signal to control whether the laser works.

Solution 5: A control method for a human eye protection circuit is provided, applied to a mechanical rotary vehicle-mounted lidar. The vehicle-mounted lidar is provided with a laser and a rotating mirror motor configured to control the laser to work. The method includes:
obtaining a level signal based on a rotation situation of the rotating mirror motor;
outputting a laser control signal based on the level signal and the human eye protection circuit according to any one of solutions 1 to 4; and
automatically controlling, based on the control signal, whether the laser works.

Solution 6: In the control method according to Solution 5, the rotating mirror motor is provided with a Hall sensor, configured to convert the rotation situation of the rotating mirror motor into the level signal, a metal ring of the rotating mirror motor is provided with a gap, the Hall sensor generates a high level when the gap passes the Hall sensor with rotation of the rotating mirror motor, and the control method for a human eye protection circuit further includes: converting the rotation situation of the rotating mirror motor into the level signal based on at least the following steps:
outputting, by the Hall sensor, a low-level signal when the rotating mirror motor does not rotate; and
outputting, by the Hall sensor, a pulse signal when the rotating mirror motor rotates, where a pulse period of the pulse signal depends on a rotation speed of the rotating mirror motor.

Solution 7: In the control method according to Solution 6, the control method for a human eye protection circuit further includes:
the pulse period of the pulse signal output by the Hall sensor is greater than a preset period threshold when the rotation speed of the rotating mirror motor is less than a preset rotation speed threshold;
periodically outputting, by the first comparator, a low-level signal based on the pulse signal output by the Hall sensor, where a period of the low-level signal is consistent with the pulse period of the pulse signal output by the Hall sensor; and
discharging the capacitor when the first comparator outputs the low-level signal, so that a level of a non-inverting input terminal of the second comparator is higher than a second reference voltage.

Solution 8: In the control method according to Solution 6, the outputting a laser control signal includes:
the output laser control signal is at a low level when the rotating mirror motor does not rotate or the rotation speed of the rotating mirror motor is less than a preset rotation speed threshold; and
the output laser control signal is at a high level when the rotation speed of the rotating mirror motor is not less than the preset rotation speed threshold.

Solution 9: An electronic device is provided, including a processor and a memory. The memory is adapted to store a plurality of piece of program code, and the program code is adapted to be loaded and executed by the processor to perform the control method for a human eye protection circuit according to any one of solutions 5 to 8.

Solution 10: A computer-readable storage medium is provided. The computer-readable storage medium stores a plurality of program codes, and the program code is adapted to be loaded and executed by the processor to perform the control method for a human eye protection circuit according to any one of solutions 5 to 8.

Solution 11: A vehicle is provided, including a vehicle body, vehicle-mounted lidar, and the human eye protection circuit described in any one of solutions 1 to 4 and/or the electronic device described in Solution 9.

The above one or more technical solutions of the disclosure have at least one or more of the following beneficial effects:
In the technical solutions for implementing the disclosure, the Hall sensor of the rotating mirror motor outputs a signal, and the laser control signal is output by comparators of two stages and a logic control gate, to automatically control, based on the rotation situation of the rotating mirror motor, the laser to work. When the rotating mirror motor stops rotating or rotates at a low speed, the laser stops working. When the rotating mirror motor rotates normally, the laser works normally, to prevent continuous emissions from the vehicle-mounted lidar to a fixed object.

In the technical solutions for implementing the disclosure, a safety protection mechanism is set based on a working situation of the vehicle-mounted lidar, and whether the laser works is controlled with reference to the rotation situation of the rotating mirror motor, to avoid causing a safety accident or damage to a human eye because the rotating mirror motor does not rotate and the laser continuously emits laser pulses to the fixed object. In the automatic control solution, manual intervention and software algorithm control do not need to be performed, and a used component is simple, to reduce costs of the vehicle-mounted lidar.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic diagram of a human eye protection circuit according to an embodiment of the disclosure;
FIG. 2 is a schematic diagram of a reference voltage module corresponding to a human eye protection circuit according to the disclosure;
FIG. 3 is a flowchart of main steps of a control method for a human eye protection circuit according to an embodiment of the disclosure;
FIG. 4 is a schematic diagram of a human eye protection circuit according to another embodiment of the disclosure; and
FIG. 5 is a block diagram of a main structure of an electronic device configured to perform a control method according to the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" can include hardware, software, or a combination thereof. A module can include a hardware circuit, various suitable sensors, a communication port, and a memory, or can include a software part, for example, program code, or can be a combination of software and hardware. The processor can be a central processing unit, a microprocessor, a graphics processing unit, a digital signal processor, or any other suitable processor. The processor has a data and/or signal processing function. The processor can be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and can include only A, only B, or A and B. The terms "a/an" and "this" in the singular form can also include the plural form.

The disclosure provides a human eye protection circuit.

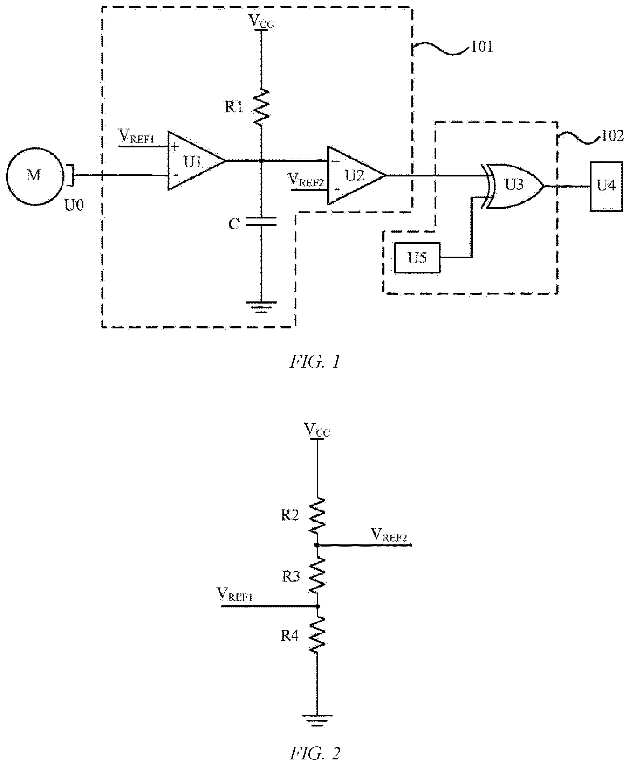

FIG. 1 is a schematic diagram of a human eye protection circuit according to an embodiment of the disclosure. As shown in FIG. 1, the human eye protection circuit is applied to a mechanical rotary vehicle-mounted lidar. The vehicle-mounted lidar is provided with a laser U4 and a rotating mirror motor M configured to control rotation of the laser. The human eye protection circuit includes a comparator circuit 101 and a control circuit 102. The comparator circuit 101 includes at least a first comparator U1 and a second comparator U2, an output terminal of the first comparator U1 is connected to an input terminal of the second comparator U2, and the comparator circuit 101 is configured to output a level signal to the control circuit 102 based on a rotation situation of the rotating mirror motor M. The control circuit 102 includes at least one logic gate, and the control circuit 102 is configured to: receive the level signal output by the comparator circuit 101, and output a laser control signal to control whether the laser U4 works.

For example, the first comparator U1 is configured to: distinguish whether the rotating mirror motor M rotates or does not rotate, and output a level signal. The second comparator U2 is configured to: distinguish whether a rotation speed of the rotating mirror motor M is less than or not less than a preset rotation speed threshold, and output a level signal.

In another embodiment of the disclosure, the first comparator U1 and the second comparator U2 can alternatively be configured to distinguish the rotation situation of the rotating mirror motor M in another manner. This is not limited to this embodiment, as long as the comparator circuit 101 can output the level signal to the control circuit 102 based on the rotation situation of the rotating mirror motor M.

In this embodiment, the rotating mirror motor M is provided with a Hall sensor U0, configured to convert the rotation situation of the rotating mirror motor M into a level signal, and the comparator circuit 101 includes: The first comparator U1 is an inverting comparator, an inverting input terminal of the first comparator serves as an input terminal of the comparator circuit 101 and receives the level signal sent by the Hall sensor U0, and a non-inverting input terminal of the first comparator U1 is connected to a first reference voltage V_{REF1}.

The second comparator U2 is a non-inverting comparator, the output terminal of the first comparator U1 is connected to a non-inverting input terminal of the second comparator, an output terminal of the second comparator U2 serves as an output terminal of the comparator circuit 101 and outputs the level signal to the control circuit 102, and an inverting input terminal of the second comparator U2 is connected to a second reference voltage V_{REF2}. The first reference voltage V_{REF1} is lower than the second reference voltage V_{REF2}.

Further, the comparator circuit 101 further includes a first resistor R1 and a capacitor C; and a common terminal of the first resistor R1 and the capacitor C is connected to the non-inverting input terminal of the second comparator U2, the other terminal of the first resistor R1 is connected to a power supply voltage Vcc, and the other terminal of the capacitor C is grounded. The power supply voltage Vcc is configured to charge the capacitor C, so that the capacitor C can supply a level to the second comparator U2. The first resistor R1 is configured to provide protection, and limit a current.

Specifically, the power supply voltage Vcc is 3.3 V, and both the first reference voltage V_{REF1} and the second reference voltage V_{REF2} are less than 3.3 V.

Further, the human eye protection circuit further includes a reference voltage module. FIG. 2 is a schematic diagram of a reference voltage module corresponding to a human eye protection circuit according to the disclosure. As shown in FIG. 2, after three voltage divider resistors R2, R3, and R4 are connected in series, one terminal is connected to a power supply voltage Vcc, and the other terminal is grounded. A voltage at a common terminal of the voltage divider resistors R2 and R3 is used as the second reference voltage V_{REF2}, and is connected to the inverting input terminal of the second comparator U2. A voltage at a common terminal of the voltage divider resistors R3 and R4 is used as the first reference voltage V_{REF1}, and is connected to the non-inverting input terminal of the first comparator U1.

In this implementation, resistance values of the voltage divider resistors R2, R3, and R4 are all 10 kΩ, the power supply voltage Vcc is 3.3 V, the first reference voltage V_{REF1} is 1.1 V, and the second reference voltage V_{REF2} is 2.2 V In another implementation, based on actual requirements of the first comparator U1 and the second comparator U2, the voltage divider resistors R2, R3, and R4 can alternatively have another resistance value, to obtain the corresponding first reference voltage V_{REF1} and the corresponding second reference voltage V_{REF2}, provided that the first reference voltage V_{REF1} is lower than the second reference voltage V_{REF2}.

In this embodiment, the control circuit 102 includes: the logic gate is an exclusive OR gate U3, a first input terminal of the exclusive OR gate U3 serves as an input terminal of the control circuit 101 and receives the level signal output by the comparator circuit 102, and a second input terminal of the exclusive OR gate U3 receives a high-level signal; and an output terminal of the exclusive OR gate U3 serves as an output terminal of the control circuit 101, and is configured to output the laser control signal to control whether the laser U4 works.

For example, the second input terminal of the exclusive OR gate U3 is connected to the controller U5, and a high-level signal is output to the exclusive OR gate U3 by the controller U5.

The disclosure further provides a control method for a human eye protection circuit, applied to the human eye protection circuit according to any one of the above technical solutions.

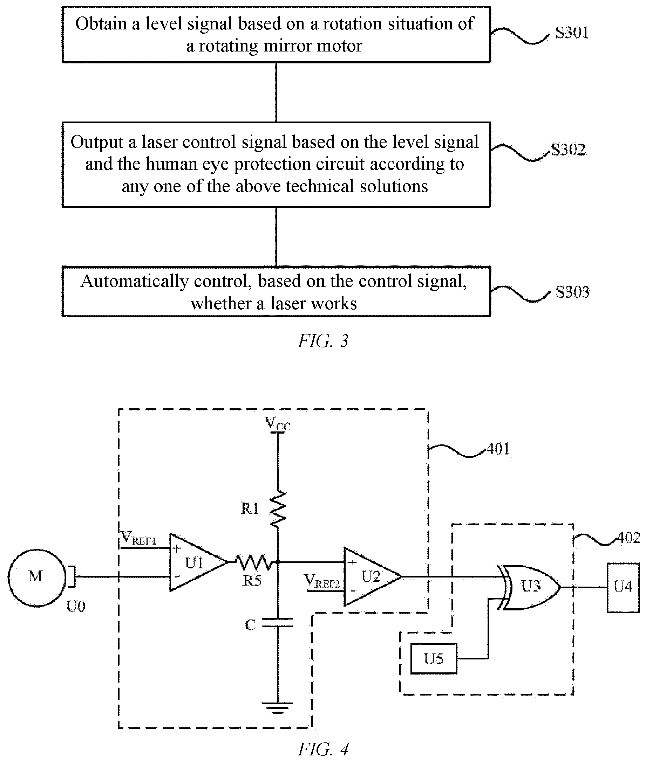

FIG. 3 is a flowchart of main steps of a control method for a human eye protection circuit according to an embodiment of the disclosure. As shown in FIG. 3, the disclosure provides a control method for a human eye protection circuit, applied to a mechanical rotary vehicle-mounted lidar. The vehicle-mounted lidar is provided with a laser and a rotating mirror motor configured to control the laser to work. The control method for a human eye protection circuit in this embodiment of the disclosure mainly includes step S301 to step S303.

Step S301: A level signal is obtained based on a rotation situation of the rotating mirror motor.

In an embodiment, the rotating mirror motor M is provided with a Hall sensor U0, configured to convert the rotation situation of the rotating mirror motor M into the level signal, a metal ring of the rotating mirror motor M is provided with a gap, the Hall sensor U0 generates a high level when the gap passes the Hall sensor U0 with rotation of the rotating mirror motor M, and the Hall sensor U0 generates a low level when a non-gap location of the metal ring passes the Hall sensor U0.

In this embodiment, the control method for a human eye protection circuit further includes: converting the rotation situation of the rotating mirror motor into the level signal based on at least the following steps: outputting, by the Hall sensor, a low-level signal when the rotating mirror motor does not rotate; and outputting, by the Hall sensor, a pulse signal when the rotating mirror motor rotates, where a pulse period of the pulse signal depends on a rotation speed of the rotating mirror motor.

Step S302: A laser control signal is output based on the level signal and the human eye protection circuit according to any one of the above technical solutions.

In this embodiment, the outputting a laser control signal includes: the output laser control signal is at a low level when the rotating mirror motor does not rotate or the rotation speed of the rotating mirror motor is less than a preset rotation speed threshold; and the output laser control signal is at a high level when the rotation speed of the rotating mirror motor is not less than the preset rotation speed threshold.

In an implementation, the Hall sensor U0 outputs a low-level signal when the rotating mirror motor M does not rotate. Because the first comparator U1 is an inverting comparator, when an input voltage is lower than the first reference voltage V_{REF1}, the first comparator U1 outputs a high-level signal. The first comparator U1 outputs the high-level signal based on the low-level signal output by the Hall sensor U0. Because the second comparator U2 is a non-inverting comparator, when an input voltage is higher than the second reference voltage V_{REF2}, the second comparator U2 outputs a high-level signal. Therefore, the second comparator U2 outputs the high-level signal. The controller U5 outputs a high-level signal. Because the exclusive OR gate U3 outputs a high level when levels at two input terminals are different, and the two input terminals of the exclusive OR gate U3 are at a high level, the exclusive OR gate U3 outputs a low level, that is, the laser control signal is at a low level.

In another implementation, a pulse period of a pulse signal output by the Hall sensor U0 is greater than a preset period threshold when the rotation speed of the rotating mirror motor M is less than a preset rotation speed threshold; Because the first comparator U1 is an inverting comparator, the first comparator U1 periodically outputs a low-level signal based on the pulse signal output by the Hall sensor U0. A period of the low-level signal is consistent with the pulse period of the pulse signal output by the Hall sensor U0. The capacitor C is discharged when the first comparator U1 outputs the low-level signal, so that a level of a non-inverting input terminal of the second comparator U2 is higher than a second reference voltage V_{REF2}. Because the second comparator U2 is a non-inverting comparator, the second comparator U2 outputs a high-level signal. The controller U5 outputs a high-level signal. Because two input terminals of the exclusive OR gate U3 are at a high level, the laser control signal output by the exclusive OR gate U3 is at a low level.

In another implementation, a pulse period of a pulse signal output by the Hall sensor U0 is not greater than a preset period threshold when the rotation speed of the rotating mirror motor M is not less than a preset rotation speed threshold. Because the first comparator U 1 is an inverting comparator, the first comparator U 1 periodically outputs a low-level signal based on the pulse signal output by the Hall sensor U0. A period of the low-level signal is consistent with the pulse period of the pulse signal output by the Hall sensor U0. Because the period of the low-level signal is not greater than the preset period threshold, when the first comparator U1 outputs the low-level signal, the capacitor C is discharged, but a level of a non-inverting input terminal of the second comparator U2 cannot reach a second reference voltage V_{REF2}. Because the second comparator U2 is a non-inverting comparator, the second comparator U2 outputs a low-level signal. The controller U5 outputs a high-level signal. Because the exclusive OR gate U3 outputs a high level when levels at two input terminals are different, a laser control signal output by the exclusive OR gate U3 is at a high level.

Further, when the capacitor C is discharged, the level of the non-inverting input terminal of the second comparator U2 is related to a voltage that is of the capacitor C and that exists before the capacitor C is discharged. The first comparator U1 periodically outputs the low-level signal because the rotating mirror motor M rotates, the capacitor C is discharged when the first comparator U1 outputs the low-level signal, and the capacitor C is charged when the first comparator U1 does not output the low-level signal. Therefore, when the rotation speed of the rotating mirror motor M is less than a preset rotation speed threshold, because charging duration is sufficient, the voltage that is of the capacitor C and that exists before the capacitor C is discharged is between 2.2 V and 3.3 V, and is higher than the second reference voltage V_{REF2}. When the rotation speed of the rotating mirror motor M is not less than a preset rotation speed threshold, because charging duration is insufficient, the voltage that is of the capacitor C and that exists before the capacitor C is discharged is less than 2.2 V, and is lower than the second reference voltage V_{REF2}.

Further, when the capacitor C is discharged, the level of the non-inverting input terminal of the second comparator U2 is related to a discharge speed of the capacitor C. In an embodiment, a resistor can be additionally disposed between the first comparator U1 and the capacitor C, to limit the discharge speed of the capacitor C, so as to ensure that when the rotation speed of the rotating mirror motor M is less than the preset rotation speed threshold, the level of the non-inverting input terminal of the second comparator U2 is higher than the second reference voltage V_{REF2}.

FIG. 4 is a schematic diagram of a human eye protection circuit according to another embodiment of the disclosure. In FIG. 4, a resistor R5 is added between the first comparator U1 and the capacitor C, and a resistance value of the resistor R5 can be set by a person skilled in the art based on an actual situation. For a connection manner of other components in the comparator circuit 401 and the control circuit 402, refer to the above embodiment of the human eye protection circuit.

Step S303: Whether the laser works is automatically controlled based on the control signal.

In this embodiment, when the laser control signal is at a high level, the laser works normally; and when the laser control signal is at a low level, the laser stops working.

Based on step S301 to step S303, the Hall sensor of the rotating mirror motor outputs a signal, and the laser control signal is output by comparators of two stages and a logic control gate, to automatically control, based on the rotation situation of the rotating mirror motor, the laser to work. When the rotating mirror motor stops rotating or rotates at a low speed, the laser stops working. When the rotating mirror motor rotates normally, the laser works normally, to prevent continuous emissions from the vehicle-mounted lidar to a fixed object.

In the technical solutions for implementing the disclosure, a safety protection mechanism is set based on a working situation of the vehicle-mounted lidar, and whether the laser works is controlled with reference to the rotation situation of the rotating mirror motor, to avoid causing a safety accident or damage to a human eye because the rotating mirror motor does not rotate and the laser continuously emits laser pulses to the fixed object. In the automatic control solution, manual intervention and software algorithm control do not need to be performed, and a used component is simple, to reduce costs of the vehicle-mounted lidar.

It should be noted that, although the steps are described in a specific sequence in the above embodiments, a person skilled in the art can understand that, to achieve an effect of the disclosure, different steps do not need to be performed in such a sequence, and the steps can be performed simultaneously (in parallel) or in another sequence. These changes fall within the protection scope of the disclosure.

All the above optional technical solutions can be combined in any combination to form optional embodiments of the disclosure, which will not be described herein one by one again.

Further, the disclosure further provides an electronic device. FIG. 4 is a block diagram of a main structure of an electronic device configured to perform a control method according to the disclosure.

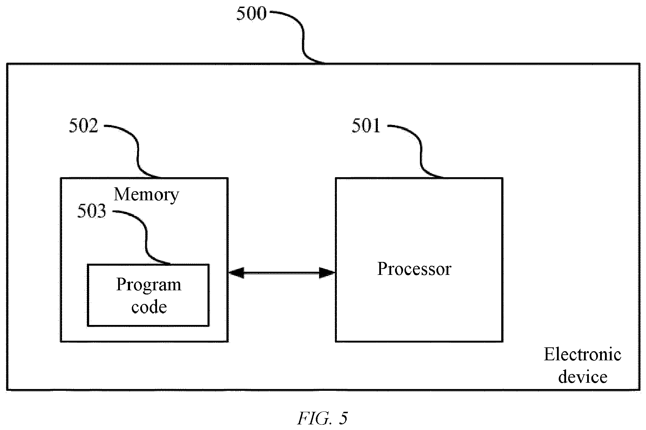

As shown in FIG. 5, in an electronic device embodiment of the disclosure, the electronic device includes a processor 501 and a memory 502. The memory 502 may be configured to store program code 503 for performing the control method for a human eye protection circuit in the above method embodiments. The processor 501 may be configured to execute the program code 503 in the memory 502. The program code 503 includes but is not limited to program code 503 for performing the control method in the above method embodiments. For ease of description, only parts related to the embodiments of the disclosure are shown. For specific technical details that are not disclosed, refer to the method part of the embodiments of the disclosure.

For example, the processor 501 may be a central processing unit (CPU), or may be another general-purpose processor, a digital signal processor (DSP), an application-specific integrated circuit (ASIC), a field-programmable gate array (FPGA) or another programmable logic device, a discrete gate or transistor logic device, a discrete hardware component, etc. The general-purpose processor can be a microprocessor, or the processor can be any conventional processor or the like.

The memory 502 can be an internal storage unit of the electronic device 500, for example, a hard disk or a memory of the electronic device 500. The memory 502 may alternatively be an external storage device of the electronic device 500, for example, a plug-connected hard disk, a smart media card (SMC), a secure digital (SD) card, or a flash card provided on the electronic device 500. Further, the memory 502 may alternatively include both the internal storage unit of the electronic device 500 and the external storage device. The memory 502 is configured to store a computer program and other programs and data required by the electronic device 700. The memory 702 can be further configured to temporarily store data that has been or is to be output.

In some possible implementations, the electronic device 500 can include a plurality of processors 501 and a memory 502. The program code 503 for performing the control method for a human eye protection circuit in the above method embodiments can be divided into a plurality of segments of subprograms, and each segment of subprogram can be loaded and executed by the processor 501 to perform different steps of the control method in the above method embodiments. Specifically, different segments of subprogram can be separately stored in different memories 502. Each processor 501 may be configured to execute programs in one or more memories 502, to jointly implement the control method for a human eye protection circuit in the above method embodiments. That is, the processors 501 separately perform different steps of the control method in the above method embodiments, to jointly implement the control method for a human eye protection circuit in the above method embodiments.

The plurality of processors 501 can be processors deployed on a same device. For example, the electronic device can be a high-performance device including a plurality of processors, and the plurality of processors 501 can be processors configured on the high-performance device. In addition, the plurality of processors 501 can also be processors deployed on different devices. For example, the electronic device can be a server cluster, and the plurality of processors 501 can be processors on different servers in the server cluster.

The electronic device 500 can be an electronic device such as a desktop computer, a notebook, a palmtop computer, or a cloud server. The electronic device 500 can include but is not limited to the processor 501 and the memory 502. A person skilled in the art can understand that FIG. 4 shows merely an example of the electronic device 500, and constitutes no limitation on the electronic device 500. The electronic device can include more or fewer components than those shown in the figure, or can combine some components, or have different components. For example, the electronic device can further include an input/output device, a network access device, a bus, and the like.

Further, the disclosure further provides a computer-readable storage medium. In a computer-readable storage medium embodiment of the disclosure, the computer-readable storage medium can be configured to store a program for performing a control method for a human eye protection circuit in the above method embodiments, and the program can be loaded and executed by a processor to implement the control method. For ease of description, only parts related to the embodiments of the disclosure are shown. For specific technical details that are not disclosed, refer to the method part of the embodiments of the disclosure. The computer-readable storage medium can be a storage apparatus formed by various electronic devices. Optionally, the computer-readable storage medium in the embodiment of the disclosure is a non-transitory computer-readable storage medium.

Further, the disclosure further provides a vehicle, including a vehicle body, vehicle-mounted lidar, and the human eye protection circuit and/or the electronic device according to any one of the above technical solutions.

In the above embodiments, descriptions of all the embodiments have respective focuses. For a part that is not described in detail in an embodiment, refer to related descriptions in another embodiment.

A person skilled in the art can be aware that, in combination with the examples described in the embodiments of the disclosure, units and algorithm steps can be implemented by electronic hardware or a combination of computer software and electronic hardware. Whether the functions are performed by hardware or software depends on particular applications and design constraints of the technical solutions. A person skilled in the art can use different methods to implement the described functions for each particular application, but it should not be considered that the implementation goes beyond the scope of the disclosure.

In the embodiments provided in the disclosure, it should be understood that the disclosed electronic device and method can be implemented in another manner. For example, the described electronic device embodiment is merely an example. For example, division into the modules or units is merely logical functional division and can be other division in an actual implementation. For example, a plurality of units or components can be combined or integrated into another system, or some features can be ignored or not performed. In addition, the displayed or discussed mutual couplings or direct couplings or communication connections can be implemented through some interfaces. The indirect couplings or communication connections between the apparatuses or units can be implemented in electronic, mechanical, or other forms.

The units described as separate parts may or may not be physically separate, and parts displayed as units may or may not be physical units, in other words, can be located in one place, or can be distributed on a plurality of network units. Some or all units can be selected based on an actual requirement, to achieve the objectives of the solutions in embodiments.

In addition, functional units in the embodiments of the disclosure can be integrated into one processing unit, each of the units can exist alone physically, or two or more units are integrated into one unit. The integrated unit can be implemented in a form of hardware, or can be implemented in a form of a software functional unit.

When the integrated module/unit is implemented in the form of a software functional unit and sold or used as an independent product, the integrated unit can be stored in a computer-readable storage medium. Based on such an understanding, in the disclosure, all or some of the procedures of the methods in the above embodiments can be implemented by a computer program instructing related hardware. The computer program can be stored in a computer-readable storage medium. When the computer program is executed by a processor, the steps in the method embodiments can be implemented. The computer program can include computer program code. The computer program code can be in a source code form, an object code form, an executable file form, some intermediate forms, or the like. The computer-readable medium can include: any entity or apparatus that can carry computer program code, a recording medium, a USB flash drive, a mobile hard disk, a magnetic disk, an optical disc, a computer memory, a read-only memory (ROM), a random access memory (RAM), an electrical carrier signal, a telecommunication signal, a software distribution medium, and the like. It should be noted that content included in the computer-readable medium can be appropriately added or subtracted according to a requirement of legislation and patent practices in a jurisdiction. For example, in some jurisdictions, the computer-readable medium does not include an electrical carrier signal or a telecommunication signal based on legislation and patent practices.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art can make equivalent changes or substitutions to the related technical features without departing from the principle of the disclosure, and all the technical solutions with such changes or substitutions shall fall within the scope of protection of the disclosure.

## Claims

1. A human eye protection circuit, applied to a mechanical rotary vehicle-mounted lidar provided with a laser and a rotating mirror motor configured to control rotation of the laser, wherein the human eye protection circuit comprises a comparator circuit and a control circuit;
the comparator circuit comprises at least a first comparator and a second comparator, an output terminal of the first comparator is connected to an input terminal of the second comparator, and the comparator circuit is configured to output a level signal to the control circuit based on a rotation situation of the rotating mirror motor; and
the control circuit comprises at least one logic gate, and the control circuit is configured to: receive the level signal output by the comparator circuit, and output a laser control signal to control whether the laser works.

2. The circuit according to claim 1, wherein the rotating mirror motor is provided with a Hall sensor, configured to convert the rotation situation of the rotating mirror motor into a level signal, wherein the comparator circuit comprises:
the first comparator is an inverting comparator, an inverting input terminal of the first comparator serves as an input terminal of the comparator circuit and receives the level signal sent by the Hall sensor, and a non-inverting input terminal of the first comparator is connected to a first reference voltage; and
the second comparator is a non-inverting comparator, the output terminal of the first comparator is connected to a non-inverting input terminal of the second comparator, an output terminal of the second comparator serves as an output terminal of the comparator circuit and outputs a level signal to the control circuit, and an inverting input terminal of the second comparator is connected to a second reference voltage; and the first reference voltage is lower than the second reference voltage.

3. The circuit according to claim 2, wherein the comparator circuit further comprises a first resistor and a capacitor; and
a common terminal of the first resistor and the capacitor is connected to the non-inverting input terminal of the second comparator, the other terminal of the first resistor is connected to a power supply voltage, and the other terminal of the capacitor is grounded.

4. The circuit according to any one of claims 1 to 3, wherein the control circuit comprises: the logic gate is an exclusive OR gate, a first input terminal of the exclusive OR gate serves as an input terminal of the control circuit and receives the level signal output by the comparator circuit, and a second input terminal of the exclusive OR gate receives a high-level signal; and an output terminal of the exclusive OR gate serves as an output terminal of the control circuit, and is configured to output the laser control signal to control whether the laser works.

5. A control method for a human eye protection circuit, applied to mechanical rotary vehicle-mounted lidar, wherein the vehicle-mounted lidar is provided with a laser and a rotating mirror motor configured to control the laser to work, and the method comprises:
obtaining a level signal based on a rotation situation of the rotating mirror motor;
outputting a laser control signal based on the level signal and the human eye protection circuit according to any one of claims 1 to 4; and
automatically controlling, based on the control signal, whether the laser works.

6. The control method according to claim 5, wherein the rotating mirror motor is provided with a Hall sensor, configured to convert the rotation situation of the rotating mirror motor into a level signal, a metal ring of the rotating mirror motor is provided with a gap, the Hall sensor generates a high level when the gap passes the Hall sensor with rotation of the rotating mirror motor, and the control method for a human eye protection circuit further comprises: converting the rotation situation of the rotating mirror motor into the level signal based on at least the following steps:
outputting, by the Hall sensor, a low-level signal when the rotating mirror motor does not rotate; and
outputting, by the Hall sensor, a pulse signal when the rotating mirror motor rotates, wherein a pulse period of the pulse signal depends on a rotation speed of the rotating mirror motor.

7. The control method according to claim 6, wherein the control method for a human eye protection circuit further comprises:
the pulse period of the pulse signal output by the Hall sensor is greater than a preset period threshold when the rotation speed of the rotating mirror motor is less than a preset rotation speed threshold;
periodically outputting, by the first comparator, a low-level signal based on the pulse signal output by the Hall sensor, wherein a period of the low-level signal is consistent with the pulse period of the pulse signal output by the Hall sensor; and
discharging the capacitor when the first comparator outputs the low-level signal, so that a level of a non-inverting input terminal of the second comparator is higher than a second reference voltage.

8. The control method according to claim 6 or 7, wherein the outputting a laser control signal comprises:
the output laser control signal is at a low level when the rotating mirror motor does not rotate or the rotation speed of the rotating mirror motor is less than a preset rotation speed threshold; and
the output laser control signal is at a high level when the rotation speed of the rotating mirror motor is not less than the preset rotation speed threshold.

9. An electronic device, comprising a processor and a memory, wherein the memory is adapted to store a plurality of program codes, and the program code is adapted to be loaded and executed by the processor to perform the control method for a human eye protection circuit according to any one of claims 5 to 8.

10. A computer-readable storage medium, wherein the computer-readable storage medium stores a plurality of program codes, and the program code is adapted to be loaded and executed by the processor to perform the control method for a human eye protection circuit according to any one of claims 5 to 8.
